# EUROPÄISCHE PATENTSCHRIFT

(11) **EP 1 391 618 B1**
(45) Veröffentlichungstag und Bekanntmachung des Hinweises auf die Patenterteilung: **26.10.2005**
(21) Anmeldenummer: 03018823.9
(22) Anmeldetag: 19.08.2003
(51) Int. Cl.: F16B 39/30, F16K 27/00, F16K 31/06

(54) **Schraubensicherung**
Screw locking device
Dispositif de sécurité pour vis

(30) Priorität: 23.08.2002 DE 10238832
(43) Veröffentlichungstag der Anmeldung: 25.02.2004
(73) Patentinhaber: HYDAC Electronic GmbH, 66280 Sulzbach/Saar (DE)
(72) Erfinder: Haser-Bindelli, Dirk, 66126 Saarbrücken (DE); Martin, Bill, 66625 Nohfelden (DE)
(74) Vertreter: Bartels & Partner

(56) Entgegenhaltungen:
- DE-A- 10 023 388
- DE-A- 19 953 209
- US-A- 3 133 578
- US-A- 3 249 142
- US-A- 5 672 037
- US-A- 5 876 168

## Beschreibung

Die Erfindung betrifft eine Schraubensicherung, insbesondere für den Einsatz in Gehäuseteilen von Ventilen, insbesondere Proportionalventilen, mit den Merkmalen des Patentanspruches 1.

Dahingehende Schraubensicherungen sind in einer Vielzahl von Ausführungsformen auf dem Markt frei erhältlich. Unter anderem dient als Schrauben- oder Gewindesicherung ein Sicherungselement, das dem selbsttätigen Lösen einer Schraubenverbindung über erhöhten Reibungsschluß entgegenwirkt. Dabei wird der Reibungsschluß in Abhängigkeit von Durchmesser und Gewindeüberstand der auf das geforderte Sicherungs- und Prüfmoment bezogenen Sicherungselemente erzeugt. Als Sicherungselement dienen dabei zwei oder mehrere in ein Außengewinde eingelassene Polyamideinsätze, die mit den Gewindegängen eines korrespondierenden Innengewindes unter Bildung des Reibungsschlusses wechselwirken. Die feste Verbindung des Außengewindes, beispielsweise in Form eines Schraubenbolzens mit dem Sicherungselement schließen ein Vergessen der Sicherung aus, wie dies bei losen Scheiben, Federringen etc. sonst der Fall ist.

Obwohl sich die bekannte Gewindesicherung auf dem Markt sehr bewährt hat, ist sie aufgrund der zusätzlichen Sicherungselemente relativ teuer und aufwendig in der Herstellung und da die Sicherungselemente aus einem Kunststoffwerkstoff gebildet sind, ist die Gewindesicherung, insbesondere bei hohen Temperaturen nicht einsetzbar, da mit einem Wegfließen des Kunststoffmaterials zu rechnen ist und mit ihm das Lösen der Schraubensicherung.

Desweiteren sind im Stand der Technik Schraubensicherungen bekannt mittels eines Klebstoffes, der bei Raumtemperatur aushärtbar ist und der auf den Gewindegängen, beispielsweise in Form eines Außengewindes auf einem Schraubenbolzen aufgebracht ist. Bei der bekannten Lösung kann der Klebstoff in mikroverkapselter Form vorliegen und nach dem Aufbringen auf die Schraubengewindegänge bleibt der Klebstoff inaktiv, bis durch das Einschrauben in das Gegengewinde (Innengewinde) die Kapseln platzen und den Klebstoff derart zum Aushärten bringen. Nach vollständiger Aushärtung ist der Klebstoff nicht nur eine zuverlässige Schraubensicherung, sondern erlaubt auch eine Abdichtung der Schraubenverbindung gegenüber Fluiden wie Öl, Wasser, Benzin etc.

Nachteilig an der bekannten Lösung ist, das die Aushärtung des Klebstoffes nach dem Verschrauben temperaturabhängig ist und teilweise mehrere Stunden Aushärtungszeit bei Raumtemperatur und erhöhten Temperaturen benötigt wird, um zu einer sicheren Wirkung der Schraubensicherung zu gelangen. Auch ist die Lebensdauer dahingehend bekannter Sicherungen über den Klebstoff mit ca. 4 Jahren unter normalen trockenen Bedingungen angegeben, so dass im praktischen Einsatz unter feuchten Bedingungen, wie dies beispielsweise bei Fahrzeugen vorkommt, die dahingehende Standzeit wesentlich reduziert sein kann und im übrigen nicht genau vorherbestimmbar ist, so dass die dahingehenden Lösungen ein gewisses Maß an Sicherheitsrisiken mit sich bringen.

Desweiteren sind im Stand der Technik Proportionalventile bekannt, beispielsweise in Form eines Proportionaldruckregelventiles nach der DE 199 53 209 A1. Die bekannte Lösung betrifft ein Druckregelventil mit einem Ventilgehäuse mit mindestens einem Pumpen-, einem Nutz- und einem Tankanschluß, wobei in dem Ventilgehäuse ein von einem Magnetanker ansteuerbarer Ventilkolben geführt ist. Das bekannte Ventil ist mit einer hydraulischen Dämpfungseinrichtung versehen, die einen Dämpfungsraum aufweist, der über eine Drossel fluidführend mit dem Nutzanschluß verbunden ist, wobei über eine Verbindungsleitung in Abhängigkeit von der Stellung des Ventilkolbens wahlweise der Pumpen- oder der Tankanschluß T mit dem Nutzanschluß A verbunden sind. Aufgrund der hydraulischen Dämpfungseinrichtung bei der bekannten Ventillösung ist das Schaltverhalten stabil, insbesondere gegenüber Dauerschwingungen.

Die Dämpfungseinrichtung ist an dem einen freien Ende des Ventilgehäuses in dieses eingebracht, das der Magnetankerordnung gegenüberliegt. Um die Dämpfungseinrichtung sicher im Ende des Ventilgehäuses zu halten, ist als Sicherung eine Verbördelung oder eine Verstemmung vorgesehen, wobei plastisch verformte Gehäuseteile in diesem Bereich die Dämpfungseinrichtung als Abschluß des Ventilgehäuses in ihrer Lage definiert festhalten. Die eingegangene Verbindung läßt sich zerstörungsfrei nicht mehr lösen und ist somit irreversibel gehalten. Ferner ist es nicht möglich bei einem Fehl- oder Falscheinbau die Position der Dämpfungseinrichtung zu korrigieren oder eine entsprechende Einstellung in Form einer Einstellbewegung vorzunehmen.

Durch den nächstkommenden Stand der Technik in Form der US-A-3 133 578 ist eine gattungsgemäße Schraubensicherung bekannt für den Einsatz in Gehäuseteilen von Ventilen, insbesondere Proportionalventilen, mit einem Einschraubteil mit einem Außengewinde, das in ein korrespondierendes Innengewinde in einem das Einschraubteil umfassenden Bauteil, insbesondere Gehäuseteil, eingreift, wobei die Flankenwinkel und die Steigung der genannten Gewinde voneinander verschieden sind. Mit der bekannten Schraubensicherungslösung ist eine Möglichkeit geschaffen, eine lang andauernde Verbindung zu realisieren. Ferner ist sie kostengünstig und einfach herstellbar. Spätere Einjustiervorgänge sind jedoch nicht ohne weiteres möglich, da beim Festlegen auftretende Pressungen zwischen den Flankenteilen der Gewinde zu Hemmnissen führen können, und ebenso ist nicht auszuschließen, dass bei der bekannten Lösung aufgrund von verschiedentlich auftretendem Spiel zwischen den Flanken ungewollt Feuchtigkeit eintritt, was zu Korrosionsschäden führen kann.

Durch die US-A-5 672 037 sind Schraubensicherungslösungen bekannt, wobei bei einer Art der eingesetzten Ausführungsformen die Flankenwinkel voneinander verschieden sind, und bei anderen Ausführungsformen die Steigung der genannten Gewinde. Sofern die Flankenwinkel von Innen- und Außengewinde unterschiedlich gewählt sind, kommt es bei vollständig hergestellter Gewindeverbindung bei der bekannten Lösung entlang des Außenumfanges des zuvorderst angeordneten Gewindeganges sowie in derselben Richtung nachfolgender Gewindegänge zu einer pressenden Anlage, so dass dahingehend bei den nachfolgenden Flankenteilen kein durchgehend axialer Abstand besteht. Sofern bei der bekannten Lösung die Steigung der genannten Gewinde voneinander verschieden ist, ergibt sich entlang von in einer Richtung aufeinander zu geneigten Flankenteilen paarweise eine hohe Flächenpressungsanlage und die dazwischen liegenden entgegengesetzt liegenden Flankenteile weisen einen entsprechend axialen Abstand voneinander auf, so dass dergestalt sich zwar nach außen hin wirksam eine Abdichtung gegenüber das Eindringen von korrosiven Medien erreichen läßt; spätere Einjustiervorgänge sind jedoch kaum möglich, da dies regelmäßig zur Erhöhung der hemmenden Flächenpressung an den in Anlage befindlichen Flankenteilen führt, die diese schädigen können. Demgemäß ist bei der bekannten Lösung zur Realisierung einer funktionssicheren Schraubensicherung vorgesehen, dass sich zwischen den einander benachbarten Flanken von Außen- und Innengewinde jeweils Vorsprünge in dem jeweils gebildeten axialen Abstand erstrecken, um dergestalt die Schraubensicherungsfunktion gewährleisten zu können, wobei jedoch die dahingehenden Vorsprünge weder wirksam der auftretenden Korrosionsgefahr begegnen können, noch spätere Einjustiervorgänge ermöglichen.

Ferner sind im Stand der Technik Schraubensicherungen bekannt, bei denen nur eine Hälfte eines Flankenwinkels einer Flanke unterschiedlich gewählt ist gegenüber den sonstigen Flankenwinkeln (US-A-5,876,168) oder zeigen Lösungen auf, bei denen zwischen der Steigung des Innengewindes und der Steigung des Außengewindes ein geringfügiger Unterschied besteht (DE-A-100 23 388).

Sofern die US-A-3 249 142 Gewindeverbindungslösungen im Sinne einer Schraubensicherung offenbart, bei der im Sinne des kennzeichnenden Teils des Patentanspruches 1 der in Einschraubrichtung zuvorderst angeordnete Gewindegang bei vollständig hergestellter Gewindeverbindung mit zumindest einem seiner Flankenteile in pressender Anlage mit einem zuordenbaren Flankenteil des Innengewindes ist, und zwar im Bereich des Außenumfanges des Gewindeganges, wobei die nachfolgenden Flankenteile der Gewindegänge des Außengewindes, die in Einschraubrichtung orientiert sind, einen axialen Abstand zu den zuordenbaren Flankenteilen des Innengewindes aufweisen, wird dies über ein Einschraubteil realisiert, dessen Gewindegänge nach außen hin im Durchmesser sich konisch verbreitern, die außenumfangseitig eine Evolventenbahn ausbilden und die in Richtung der konischen Verjüngung des Einschraubteiles außenumfangseitig sich verbreiternde Anlagestege aufweisen. Die dahingehend bekannte Schraubensicherung ist aufgrund ihrer komplizierten geometrischen Struktur nur mit einem sehr hohen Herstellaufwand realisierbar und demgemäß nur für Sonderanwendungen einsetzbar.

Ausgehend von diesem Stand der Technik liegt der Erfindung die Aufgabe zugrunde, die bekannten Schraubensicherungslösungen für Ventile unter Beibehalten ihrer Vorteile, nämlich das sie kostengünstig und einfach herstellbar sind, sowie eine lang andauernde Verbindung gewährleisten, dahingehend weiter zu verbessern, dass auch spätere Einjustiervorgänge möglich sind und dass eine hohe Korrosionsbeständigkeit erreicht ist. Eine dahingehende Aufgabe löst eine Schraubensicherung mit den Merkmalen des Patentanspruches 1 in seiner Gesamtheit.

Dadurch, dass gemäß dem kennzeichnenden Teil des Patentanspruches 1 die Flankenwinkel von Außen- und Innengewinde um 2 bis 10° voneinander verschieden sind, dass die Steigung von Außen- und Innengewinde um 0,01 bis 0,3 voneinander verschieden sind, dass der in Einschraubrichtung zuvorderst angeordnete Gewindegang bei vollständig hergestellter Gewindeverbindung mit zumindest einem seiner Flankenteile in pressende Anlage mit einem zuordenbaren Flankenteil des Innengewindes ist und zwar im Bereich des Außenumfanges des Gewindeganges, und dass die nachfolgenden Flankenteile der Gewindegänge des Außengewindes, die in Einschraubrichtung orientiert sind, einen axialen Abstand zu den zuordenbaren Flankenteilen des Innengewindes aufweisen, kommt es durch die die genannte pressende Anlage in einem Teilanlagebereich zu einer hochtragfähigen Schraubensicherung, wobei jedoch die Verformungen und Verpressungen an den Flankenteilen gegenüber dem Stand der Technik noch derart niedrig sind, dass sich die Schraubensicherung reversibel wieder lösen und mithin für Einstellvorgänge an Ventilgehäusen nutzen läßt. Dahingehende Einstellvorgänge lassen sich entlang einer in der Länge beliebig vorgebbaren Einschraubstrecke eines Innengewindes in einem Gehäuseteil oder der gleichen vornehmen. Aufgrund der genannten Konzeption stellen sich dann an jeder Stelle der Einschraubstrecke die vorstehend beschriebenen Wirkungen der Schraubensicherung ein.

Aufgrund der beschriebenen Anlage der Flankenteile aneinander ist aber nicht nur eine sichere Positionierung in Einschraubstrecken gewährleistet, sondern die erfindungsgemäße Schraubensicherung ist auch in hohem Maße korrosionsbeständig. Die Schraubensicherung behält ihre einmal gewählte vorgegebene Lage bei und ein unbeabsichtigtes Lösen ist ausgeschlossen.

Da aufgrund der unterschiedlichen Flankenwinkel und Steigungsparameter die Gewindegänge selbst ohne Zusatzteile, wie Sicherungselemente, die Sicherung vornehmen, ist die Sicherung kostengünstig zu realisieren und in der Praxis anzuwenden. Besonders gute Ergebnisse für die Schraubensicherung - einen gängigen Stahlwerkstoff für ein Schraub- und Gehäuseteil, vorausgesetzt - haben sich ergeben, sofern die Flankenwinkel von Außen- und Innengewinde um 5 Grad voneinander verschieden sind und die Steigung einen Unterschied um 0,05 aufweist. Vorzugsweise ist dabei das Innengewinde des Bauteils ein genormtes Standardgewinde mit einem Flankenwinkel von 60 Grad, wobei das korrespondierende Außengewinde des Einschraubteils einen Flankenwinkel von 55 Grad hat. Sofern das Außengewinde des Einschraubteils ebenso wie das Innengewinde des Bauteils ein übliches Gewinde, beispielsweise ein M10-Gewinde, ist, weist für eine besonders sichere Ausgstaltung der Schraubensicherung das Außengewinde eine um 0,05 höhere Steigung auf als das korrespondierende Innengewinde.
Am gegenüberliegenden freien Ende der Einschraubstrecke kommt es dazu, dass das Innengewinde des Bauteils an der Stelle des Auslaufs in die Umgebungen in verpreßter Anlage mit dem Außengewinde des Einschraubteils in dessen Einschraubgrund ist, wobei zum Außenumfang des Außengewindes hin die beiden in Einschraubrichtung unmittelbar vorangehenden und benachbarten Flankenteile von Innen- und Außengewinde sich voneinander wegspreizend verlaufen.
Die dahingehenden Parameter und ihre vorgenommenen Paarungen haben sich für die Realisierung der Schraubensicherung im genannten Ventilbereich als besonders zweckmäßig und brauchbar erwiesen. In Einzelfällen, insbesondere in Abhängigkeit von den Durchmesserverhältnissen, der eingesetzten Gewinde sowie der Auswahl der Grundform, wie Trapezgewinde, Rundgewinde etc., können im Rahmen der genannten Unteransprüche, die Flankenwinkel und Steigungen auch anders gewählt sein.
Weitere vorteilhafte Ausführungsformen der Schraubensicherung sind im übrigen Gegenstand der sonstigen Unteransprüche.
Im folgenden wird die erfindungsgemäße Schraubensicherung anhand eines Ausführungsbeispieles nach der Zeichnung näher erläutert. Dabei zeigen in prinzipieller und nicht maßstäblicher Darstellung die
- Fig. 1: einen Längsschnitt durch Teile eines Proportionalventiles mit am unteren Ende eingedrehten Verschlußstopfen nebst Schraubensicherung;
- Fig. 2: in vergrößerter Darstellung einen Ausschnitt bezogen auf einen Teil der Gewindegänge der Schraubensicherung bei nicht vollständig eingedrehtem Verschlußstopfen in das Ventilgehäuse nach der Figur 1.

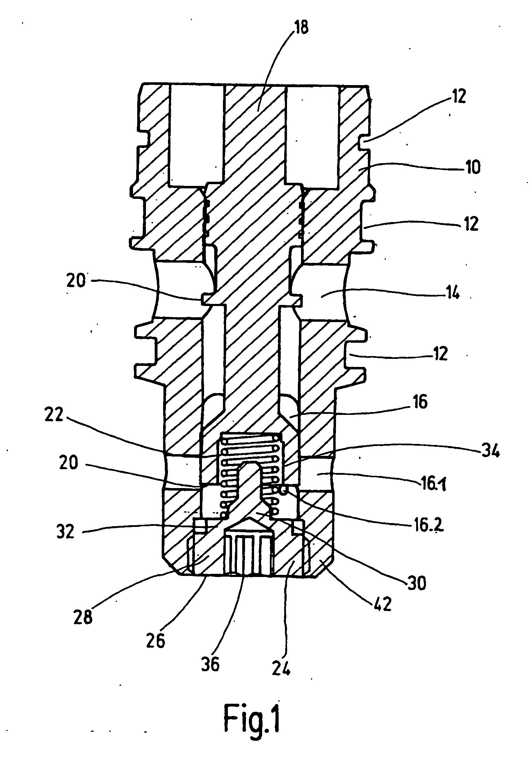

Das in der Figur 1 dargestellte Proportionalventil in Form eines Proportionaldruckventiles weist in der Art einer Einschraubpatrone ein Ventilgehäuse 10 auf. Außenumfangsseitig ist das Ventilgehäuse 10 mit Aufnahmen 12 versehen für das Anbringen üblicher Dichtsysteme zwischen das Ventilgehäuse 10 und der das Proportionalventil aufnehmenden Maschineneinrichtung (nicht dargestellt). In Blickrichtung auf die Figur 1 gesehen ist zuoberst ein Druckanschluß 14 vorgesehen und nachfolgend sind ein Nutzanschluß 16 sowie zwei Dämpfungsbohrungen 16.1 und 16.2 in Richtung eines Tankanschlusses vorhanden mit unterschiedlichen Durchlaßquerschnitten, wobei ein innerhalb des Ventilgehäuses 10 längsverfahrbar gehaltener Ventilkolben 18 die genannten Anschlüsse 14, 16, 16.1 und 16.2 über entsprechende Steuerkanten 20 ansteuert.

Des weiteren wirkt der Ventilkolben 18 mit einer nicht näher dargestellten Magnetansteuereinrichtung zusammen, die in Blickrichtung auf die Figur 1 gesehen an der Oberseite des Ventilgehäuses 10 angeordnet ist und die an der Oberseite des Ventilkolbens 18 an diesem angreift. Wird die dahingehende Magnetansteuereinrichtung bestromt, betätigt eine induktive Spule ein stößelartiges Schaltteil, das wiederum den Ventilkolben 18 gegen die Wirkung einer Druckfeder 22 verfährt. Wird die Spule weniger bestromt oder frei von Strom gehalten, dehnt sich die Druckfeder 22 aus und schiebt den Ventilkolben 18 zusammen mit dem Schaltstößel der Magnetansteuer einrichtung (nicht dargestellt) in ihre Ausgangslage zurück, wobei die Figur 1 die Ausgangslage des Proportionalventiles darstellt, bei der die Druckfeder 22 im wesentlichen entspannt ist.

Am unteren Ende des Ventilgehäuses 10 ist dieses mittels eines Verschlußstopfens 24 nach außen hin abgeschlossen. Der Verschlußstopfen 24 bildet eine Art Einschraubteil 26 aus mit einem zylindrischen Basisteil 28 und einem stirnseitig angeordneten Zentrierteil 30, das von der Druckfeder 22 umgriffen ist, wobei die Druckfeder 22 sich mit einem ihrer freien Enden an einer absatzartigen Verjüngung 32 des Basisteiles 28 abstützt sowie mit ihrem anderen Ende in eine zylindrische Ausnehmung 34 des Ventilkolbens 18 eingreift, die in Blickrichtung auf die Figur 1 gesehen oberhalb der unteren Steuerkante 20 endet. Im Basisteil 28 des Einschraubteils 26 ist des weiteren eine Innensechskantausnehmung 36 angeordnet, mittels der über ein korrespondierendes Innensechskantwerkzeug (Werkzeug nicht dargestellt) der Verschlußstopfen 24 sich in das Ventilgehäuse 10 ein- und ausschrauben läßt und darüber hinaus eine Feinjustierung des Verschlußstopfens 24 in der gezeigten eingeschraubten Einbaulage ermöglicht.

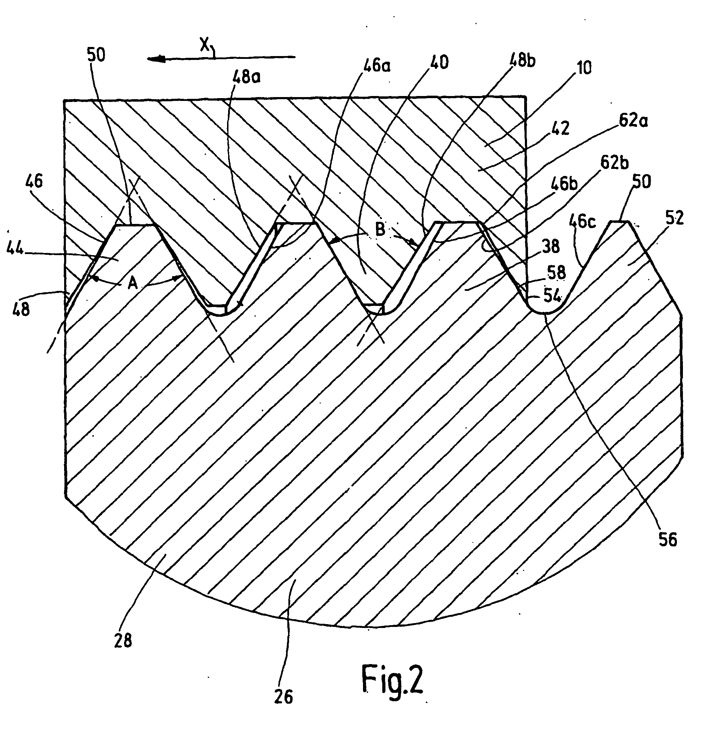

Der Verschlußstopfen 24 als Einschraubteil 26 weist außenumfangsseitig ein Außengewinde 38 in Form eines Regelgewindes, insbesondere Feingewindes (Whitworth) auf, wobei das dahingehende Außengewinde 38 in der Figur 2 vergrößert wiedergegeben ist und zwar in einer Einbaulage, bei der das Einschraubteil 26 noch nicht vollständig in das Ventilgehäuse 10 eingeschraubt ist. ln Blickrichtung auf die Figur 2 gesehen ist auf der rechten Seite die Innensechskantausnehmung (in Figur 2 nicht dargestellt) angeordnet und auf der linken Seite würde sich an das Basisteil 28 das Zentrierteil 30 (in Figur 2 nicht dargestellt) anschließen. Das genannte Außengewinde 38 greift in ein korrespondierendes Innengewinde 40 ein, das gleichfalls als Regelgewinde ausgebildet ist und das Teil des Bauteils 42 ist, das das vordere untere Ende des Ventilgehäuses 10 des Proportionalventiles ausbildet.

Zur Bildung einer einstellbaren Schraubensicherung oder Gewindesicherung sind die Flankenwinkel A und B und die Steigung der genannten Gewinde 38, 40 voneinander verschieden gewählt.

Um eine wirksame Schraubensicherung zu erreichen, ist vorgesehen, dass die Flankenwinkel A, B vom Außengewinde 38 und Innengewinde 40 sich um 2 bis 10 Grad, vorzugsweise um 5 Grad, voneinander unterscheiden. Ferner ist vorgesehen, dass die Steigung vom Außengewinde 38 und Innengewinde 40 um 0,01 bis 0,3, vorzugsweise um 0,05, voneinander verschieden sind.

Es ist für einen Fachmann auf dem Gebiet der Schraubensicherungen in der Ventiltechnik überraschend, dass er durch unterschiedliche Wahl an Flankenwinkeln sowie bezogen auf die Steigung von Außengewinde 38 und lnnengewinde 40 eine einstellbare Schrauben- oder Gewindesicherung erhält, die reversibel gehalten ist, also wieder gelöst werden kann, und dennoch eine wirksame Sicherung erhält, was für den Einsatz in fluidführenden Proportionalventilen besonders wichtig ist. Da keine zusätzlichen Sicherungsmittel notwendig sind neben den genannten Gewinden, läßt sich die Schraubensicherung in kostengünstiger Weise erhalten und ist insbesondere im Dauerbetrieb auch nicht von der Einsatzdauer her zeitlich limitiert, wie dies beispielsweise bei den üblichen Klebstoffsicherungen der Fall ist. Ferner ist die Schraubensicherung hoch-temperaturfest, so dass deren Einsatz innerhalb von Proportionalventilen mit Fluiden höherer Betriebstemperatur ohne weiteres möglich ist.

Es hat sich gezeigt, dass man zu besonders guten Ergebnissen bei der erfindungsgemäßen Schraubensicherung kommt, wenn das Innengewinde 40 des Bauteils 42 ein genormtes Standardgewinde mit einem Flankenwinkel B von 60° ist und dass das korrespondierende Außengewinde 38 des Einschraubteils 26 einen Flankenwinkel A von 55° hat. Ferner ist das Außengewinde 38 des Einschraubteils 26 ebenso wie das Innengewinde 40 des Bauteils 42 ein Standard-Gewinde, beispielsweise ein M10-Gewinde, wobei das Außengewinde 38 jedoch mit einer um 0,05 höheren Steigung als das Innengewinde 40 ausgebildet ist. So weist das Außengewinde also einen Flankenwinkel von 55° auf bei einem M10-Gewinde mit der Steigung 1,05 und einem Toleranzfeld von ± 0,01. Dies entspricht einer Toleranz von 4H. Des weiteren hat es sich als günstig erwiesen, für das eingesetzte Schraubensicherungssystem vier Gewindegänge in Ansatz zu bringen, um dergestalt zu besonders kleinen Bauformen zu gelangen. Es ist aber auch ein Einsatz in Schraubengängen beliebiger Länge möglich, da sich dort an jeder beliebigen Stelle die Vorteile der Schraubensicherung ergeben.

Wie sich des weiteren aus der Fig.2 ergibt, ist der in Einschraubrichtung X zuvorderst angeordnete Gewindegang 44 bei vollständig hergestellter Gewindeverbindung mit zumindest einem seiner Flankenteile 46 in pressender Anlage mit einem zuordenbaren Flankenteil 48 des Innengewindes 40, und zwar im Bereich des Außenumfanges 50 des genannten vorderen Gewindeganges 44. Die dahingehende vollständige Einbausituation ist in der Fig.2 nicht dargestellt, wo sich der in Einschraubrichtung entgegengesetzte Gewindegang 52 noch außerhalb der Einschraubstrecke befindet. Dennoch gibt Fig.2 einen zeichnerischen Anhalt für die vollständige Einbausituation des Verschlußstopfens 24 im Proportionalventilgehäuse 10. Die nachfolgenden Flankenteile 46a,b,c der weiteren Gewindegänge des Außengewindes 38, die in Einschraubrichtung X orientiert sind, weisen demgegenüber einen axialen Abstand zu den zuordenbaren Flankenteilen 48a,b,c des Innengewindes 40 auf.

Ist die Schraubensicherung vollständig oder nahezu vollständig hergestellt, indem die genannten Gewinde 38,40 miteinander in Eingriff sind, ist das Innengewinde 40 des Bauteils 42 an der Stelle des Auslaufs 54 in die Umgebung in enger Anlage mit dem Außengewinde 38 des Einschraubteils 26 in dessen Einschraubgrund 56. Die dahingehende pressende Anlage 58 ergibt sich insbesondere dadurch, dass zum Außenumfang 50 des Außengewindes 38 die beiden in Einschraubrichtung X unmittelbar vorangehenden und benachbarten Flankenteile 62a,b von Innengewinde 40 und Außengewinde 38 sich voneinander wegspreizend verlaufen, so dass in Richtung der Anlage 58 die Verpressungskräfte deutlich erhöht sind, was gegebenenfalls im Bereich der Anlage 58 zu plastischen Verformungen für die zugeordneten Gewindegänge in diesem Bereich führen kann.

Findet die Schraubensicherung Anwendung bei einem Proportional- oder sonstigen Ventil in der Art eines Verschlußstopfens 24 oder als Abschlußschraube, ist es möglich, über das dahingehende Einschraubteil 26 eine Voreinstellung für das Ventil durchzuführen, um dergestalt zu exakten Voreinstellungen zu gelangen. So kann man beispielsweise das nicht näher dargestellte Magnetbetätigungssystem des Proportionalventils bestromen und dergestalt den Ventilkolben 18 mit seinen Steuerkanten 20 innerhalb des Ventilgehäuses 10 längsverfahren, und zwar entgegen der Wirkung der Druckfeder 22. Stellt man nun aufgrund von Referenzwerten fest, dass die Durchflußcharakteristik einstellbar über die Steuerkanten 20 den Erfordernissen nicht genügt, kann man einen Nachjustierungsvorgang über das Einschraubteil 26 und mithin über den Verschlußstopfen 24 und die Druckfeder 22 vornehmen. Je nachdem, ob man das Einschraubteil 26 weiter in das Innere des Ventilgehäuses 10 eindreht oder herausschraubt, wird die Kraft der Druckfeder 22 erhöht bzw. erniedrigt, und zwar entgegen der Betätigungskraft des Magnetbetätigungssystems, so dass sich dergestalt die Steuerkanten 20 bei einem zuordenbaren Nennstrom genau einjustieren lassen. Die dahingehenden Einjustierungsvorgänge können mehrfach vorgenommen werden, eventuell auch später im Rahmen einer hydraulischen Nachprüfung, wenn das Proportionalventil bereits im hydraulischen System entsprechend eingebaut ist und dort seine Funktion vornimmt. Unabhängig von der Einschraubsituation des Einschraubteils 26 kommt es dann in vorgebbaren Grenzen jedenfalls aufgrund der unterschiedlichen Flankenwinkel und der Steigungen der beiden Gewinde 38,40 zu einer Art Gewindereibschluß und/oder Verklemmung über die genannten Flankenteile, so dass eine fluiddichte sichere Position auch im späteren Betrieb des Ventils gewährleistet ist. Diese Art der Gewindesicherung eignet sich insbesondere für kurze Gewindeeinbausituationen bei Ventilkörpern.

## Patentansprüche

1. Schraubensicherung für den Einsatz in Gehäuseteilen (10) von Ventilen, insbesondere Proportionalventilen, mit einem Einschraubteil (26) mit einem Außengewinde (38), das in ein korrespondierendes Innengewinde (40) in einem das Einschraubteil (26) umfassenden Bauteil (42), insbesondere Gehäuseteil (10), eingreift, wobei die Flankenwinkel (A, B) und die Steigung der genannten Gewinde (38, 40) voneinander verschieden sind, **dadurch gekennzeichnet, dass** die Flankenwinkel (A, B) von Außen- (38) und Innengewinde (40) um 2° bis 10° voneinander verschieden sind, **dass** die Steigung von Außen- (38) und Innengewinde (40) um 0,01 bis 0,3 voneinander verschieden sind, dass der in Einschraubrichtung (X) zuvorderst angeordnete Gewindegang (44) bei vollständig hergestellter Gewindeverbindung mit zumindest einem seiner Flankenteile (46) in pressender Anlage mit einem zuordenbaren Flankenteil (48) des Innengewindes (40) ist, und zwar im Bereich des Außenumfanges (50) des Gewindeganges (44), und dass die nachfolgenden Flankenteile (46 a,b,c) der Gewindegänge des Außengewindes (38), die in Einschraubrichtung (X) orientiert sind, einen axialen Abstand zu den zuordenbaren Flankenteilen (48 a,b,c) des Innengewindes (40) aufweisen.

2. Schraubensicherung nach Anspruch 1, **dadurch gekennzeichnet, dass** die Flankenwinkel (A, B) von Außen- (38) und Innengewinde (40) um 5° voneinander verschieden sind.

3. Schraubensicherung nach Anspruch 1 oder 2, **dadurch gekennzeichnet, dass** die Steigung von Außen- (38) und Innengewinde (40) um 0,05 voneinander verschieden sind.

4. Schraubensicherung nach einem der Ansprüche 1 bis 3, **dadurch gekennzeichnet, dass** das Innengewinde (40) des Bauteils (42) ein genormtes Standardgewinde mit einem Flankenwinkel (B) von 60° ist und dass das korrespondierende Außengewinde (38) des Einschraubteils (26) ein genormtes Standard-Gewinde mit einem Flankenwinkel (A) von 55° hat.

5. Schraubensicherung nach einem der Ansprüche 1 bis 4, **dadurch gekennzeichnet, dass** das Außengewinde (38) des Einschraubteils (26) ebenso wie das Innengewinde (40) des Bauteils (42) ein Feingewinde (M10x1) ist, jedoch mit einer um +0,03 höheren oder-0,03 niedrigeren Steigung als das Innengewinde (40).

6. Schraubensicherung nach einem der Ansprüche 1 bis 5, **dadurch gekennzeichnet, dass** das Außen- und Innengewinde (38, 40) jeweils 2 bis 6, vorzugsweise 4 Gewindegänge aufweisen.

7. Schraubensicherung nach Anspruch6, **dadurch gekennzeichnet, dass** das Innengewinde (40) des Bauteils (42) an der Stelle des Auslaufs (54) in die Umgebung in pressender Anlage (58) mit dem Außengewinde (38) des Einschraubteils (26) in dessen Einschraubgrund (56) ist und dass zum Außenumfang (50) des Außengewindes (38) hin die beiden in Einschraubrichtung (X) unmittelbar vorangehenden und benachbarten Flankenteile (62 a,b) von Innen- (40) und Außengewinde (38) sich voneinander wegspreizend verlaufen.

8. Schraubensicherung nach einem der Ansprüche 1 bis 7, die als Teil eines Proportionalventils ausgebildet ist, mit einem Ventilgehäuse (10), in dem ein Ventilkolben (18) mit mindestens einer Steuerkante (20) längsverfahrbar geführt ist, die gegenüber einem druckführenden Anschluß (14) im Ventilgehäuse (10) zusammen mit dem Ventilkolben über das Einschraubteil (26) mit Außengewinde (38) in der Art eines Verschlußstopfens (24) reversibel einjustierbar ist.

9. Schraubensicherung nach Anspruch 8, **dadurch gekennzeichnet, dass** der Ventilkolben (18) mittels eines Magnetsystems in der Art eines Schaltmagneten längsverfahrbar im Ventilgehäuse (10) und derart ansteuerbar gegen die resultierende Kraft einer Druckfeder (22) verfahrbar ist, die zwischen Verschlußstopfen (24) und Ventilkolben (18) wirkt.

## Claims

1. Screw holder for use in housing parts (10) of valves, especially proportional valves, with a screw-in section (26) with an external thread (38), which engages a corresponding internal thread (40) within a component (42), especially a housing part (10), incorporating the screw-in section (26), whereby the flank angles (A, B) and the pitch of the said threads (38, 40) are different from one another, **characterised in that** the flank angles (A, B) of the external (38) and internal threads (40) are different from one another by 2° to 10°, and **in that** the pitches of external (38) and internal thread (40) are different from one another by 0.01 to 0.3, and **in that** the thread (44) that is first in line when viewed in the screw-in direction (X) tightly abuts against at least one of its flank sections (46) with an allocatable flank section (48) of the internal thread (40) when the threaded connection is complete, namely within the area of the external circumference (50) of the thread (44), and **in that** the subsequent flank sections (46a, b, c) of the threads of the external thread (38) that are orientated in the screw-in direction (X) incorporate an axial gap from the allocatable flank sections (48a, b, c) of the internal thread (40).

2. Screw holder according to Claim 1, **characterised in that** the flank angles (A, B) of the external (38) and internal threads (40) are different from one another by 5°.

3. Screw holder according to Claim 1 or 2, **characterised in that** the pitches of external (38) and internal threads (40) are different from one another by 0.05.

4. Screw holder according to one of the Claims 1 to 3, **characterised in that** the internal thread (40) of the component (42) is a normed standard thread with a flank angle (B) of 60°, and **in that** the corresponding external thread (38) of the screw-in section (26) is a normed standard thread with a flank angle (A) of 55°.

5. Screw holder according to one of the Claims 1 to 4, **characterised in that** the external thread (38) of the screw-in section (26) as well as the internal thread (40) of the component (42) consists of a fine thread (M10x1), although with a pitch that is +0.03 higher or -0.03 lower than the pitch of the internal thread (40).

6. Screw holder according to one of the Claims 1 to 5, **characterised in that** the external and internal threads (38, 40) each incorporate 2 to 6, preferably 4 threads.

7. Screw holder according to Claim 6, **characterised in that** the internal thread (40) of the component (42) at the point of its ending (54) into the surrounding area is positioned in tight abutment (58) against the external thread (38) of the screw-in section (26) and the screw-in base (56) of the same, and **in that** both of the flank sections (62a, b) immediately preceding and neighbouring in screw-in direction (X) extend from the internal (40) and external threads (38), spreading away from one another towards the external circumference (50) of the external thread (38).

8. Screw holder according to one of the Claims 1 to 7, the same taking the form of a part of a proportional valve with a valve housing (10) in which a valve piston (18) with at least one controlling edge (20) can be longitudinally displaced, and which is reversibly adjustable within the valve housing (10) together with the valve piston by means of the screw-in section (26) with the external thread (38) opposite a pressurised connection (14) in the way of a closure plug (24).

9. Screw holder according to Claim 8, **characterised in that** the valve piston (18) can be longitudinally displaced within the valve housing (10) by means of a magnetic system in the way of a switching magnet, and thus displaced against the resulting force of e pressure spring (22) that acts between the closure plug (24) and the valve piston (18) in a controllable manner.

## Revendications

1. Frein de vis pour l'insertion dans des éléments de corps (10) de soupapes, en particulier de soupapes proportionnelles, avec une partie de vissage (26) pourvue d'un filetage extérieur (38) qui s'engage dans un filetage intérieur correspondant (40) d'un élément de structure (42) englobant la partie de vissage (26), en particulier d'un élément de corps (10), sachant que les angles de flanc (A, B) et les pas desdits filetages (38, 40) diffèrent entre eux, **caractérisé en ce que** les angles de flanc (A, B) des filetages extérieur (38) et intérieur (40) diffèrent de 2° à 10° l'un par rapport à l'autre, **en ce que** les pas des filetages extérieur (38) et intérieur (40) diffèrent de 0,01 à 0,3 l'un par rapport à l'autre, **en ce que** le pas de filetage (44) situé le plus à l'avant dans la direction de vissage (X) lorsque l'assemblage par filetage est complètement réalisé, est au moins par une de ses portions de flanc (46) en contact par pression avec une portion de flanc à attribuer (48) du filetage intérieur (40), à savoir dans la zone du diamètre extérieur (50) du pas de filetage (44), et **en ce que** les portions de flanc suivantes (46 a, b, c) des pas de filetage du filetage extérieur (38), qui sont orientées dans la direction de vissage (X), présentent un espacement axial par rapport aux portions de flanc à attribuer (48 a,b,c) du filetage intérieur (40).

2. Frein de vis selon la revendication 1, **caractérisé en ce que** les angles de flanc (A, B) des filetages extérieur (38) et intérieur (40) diffèrent de 5° l'un par rapport à l'autre.

3. Frein de vis selon la revendication 1 ou 2, **caractérisé en ce que** les pas des filetages extérieur (38) et intérieur (40) diffèrent de 0,05 l'un par rapport à l'autre.

4. Frein de vis selon l'une quelconque des revendications 1 à 3, **caractérisé en ce que** le filetage intérieur (40) de l'élément de structure (42) est un filetage standard normalisé avec un angle de flanc (B) de 60° et **en ce que** le filetage extérieur correspondant (38) de la partie de vissage (26) présente un filetage standard normalisé avec un angle de flanc (A) de 55°.

5. Frein de vis selon l'une quelconque des revendications 1 à 4, **caractérisé en ce que** le filetage extérieur (38) de la partie de vissage (26), comme le filetage intérieur (40) de l'élément de structure (42), est un filetage à pas fin (M10x1) ayant cependant un pas de +0,03 supérieur ou de -0,03 inférieur à celui du filetage intérieur (40).

6. Frein de vis selon l'une quelconque des revendications 1 à 5, **caractérisé en ce que** les filetages extérieur et intérieur (38, 40) présentent respectivement des pas de filetage de 2 à 6, de préférence de 4.

7. Frein de vis selon la revendication 6, **caractérisé en ce que** le filetage intérieur (40) de l'élément de structure (42) au niveau de la fin du filet (54) se trouve, dans cette zone, en contact par pression (58) avec le filetage extérieur (38) de la partie de vissage (26) dans la base de vissage (56) de celle-ci et **en ce que** les deux portions de flanc (62 a,b) des filetages intérieur (40) et extérieur (38) immédiatement précédentes et contiguës dans la direction de vissage (X) évoluent jusqu'au diamètre extérieur (50) du filetage extérieur (38) en s'écartant l'une de l'autre.

8. Frein de vis selon l'une quelconque des revendications 1 à 7, qui est conçu en tant qu'élément d'une soupape proportionnelle, avec un corps de soupape (10) dans lequel peut être introduit longitudinalement un piston à soupape (18) pourvu d'au moins une arête de commande (20), qui peut être réglée pour s'inverser par rapport à un raccord conducteur de pression (14) dans le corps de soupape (10), conjointement avec le piston à soupape, par la partie de vissage (26) à filetage extérieur (38), à la manière d'un bouchon de fermeture (24).

9. Frein de vis selon la revendication 8, **caractérisé en ce que** le piston à soupape (18) peut être introduit au moyen un système d'aimant à la manière d'un aimant de commutation dans le corps de soupape (10) et peut être ainsi actionné à l'encontre de la force résultante d'un ressort de pression (22), lequel exerce son action entre le bouchon de fermeture (24) et le piston à soupape (18).
